# FASCICULE DE BREVET EUROPEEN

(11) **EP 2 722 533 B1**
(45) Date de publication et mention de la délivrance du brevet: **02.05.2018**
(21) Numéro de dépôt: 13306423.8
(22) Date de dépôt: 17.10.2013
(51) Int. Cl.: F16B 11/00

(54) **Procédé de collage de deux pièces soumises à des efforts de traction, pièces collées obtenues**
Verklebeverfahren von zwei unter Zugkraft stehenden Teilen und so erhaltene verklebte Teile
Method for gluing two parts which are subject to tensile forces, glued pieces obtained

(30) Priorité: 18.10.2012 FR 1259920
(43) Date de publication de la demande: 23.04.2014
(73) Titulaire: Epsilon Composite, 33340 Gaillan en Medoc (FR)
(72) Inventeur: Carrere, Noël, 33611 Cestas Cédex (FR); Ciccone, Anatole, 33112 Saint Laurent Medoc (FR)
(74) Mandataire: Novagraaf Technologies

(56) Documents cités:
- EP-A1- 0 046 869
- EP-A1- 2 508 764
- US-A- 3 545 795

## Description

La présente invention concerne un procédé de collage de deux pièces soumises à des efforts de traction induisant des contraintes de cisaillement dans le film de colle.

L'invention couvre aussi les pièces collées ainsi obtenues.

Le document EP 0 046 869 A montre un procédé de réalisation d'une liaison collée selon le préambule de la revendication 1 et un tube selon le préambule de la revendication 8.

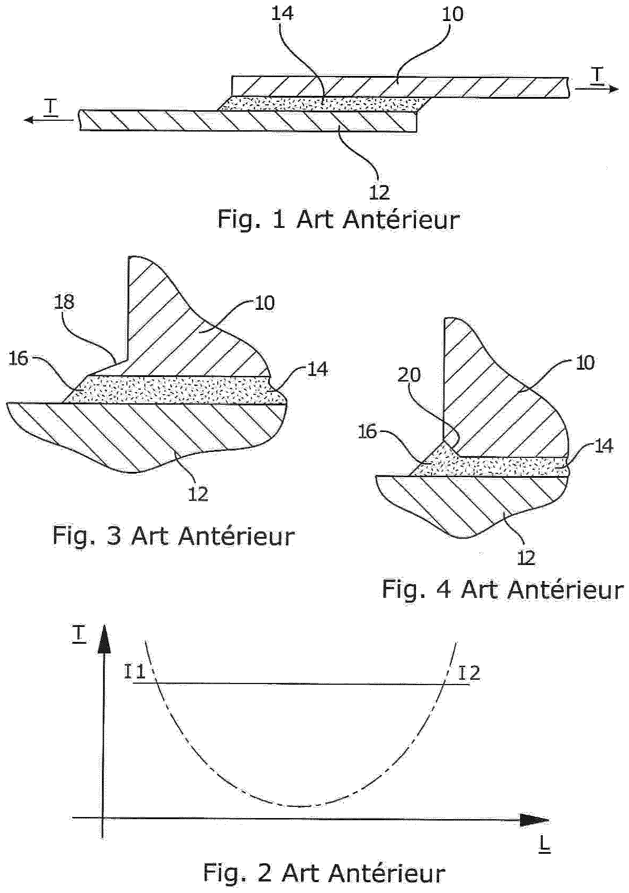

Comme l'illustre la figure 1 « Art Antérieur», lorsque deux pièces (10,12) sont assemblées par collage entre leurs surfaces parallèles, il est connu de réaliser un film de colle 14 relativement fin et d'épaisseur approximativement constante.

Dans un tel assemblage, des efforts de traction ou de compression subis par les pièces (10,12), ou des variations dimensionnelles entre les deux pièces (10,12) sont susceptibles d'induire des composantes de traction T longitudinales et perpendiculaires à la surface d'assemblage.

Ces composantes de traction T engendrent une déformation dans le film de colle s'assimilant à du cisaillement. Finalement, et cette déformation provoque des contraintes de cisaillement longitudinales dans le film de colle 14.

Par des essais ou des simulations numériques, on constate une répartition non homogène des contraintes de cisaillement au sein du film de colle 14, avec une forte sollicitation aux extrémités du film de colle 14 et une faible sollicitation du film de colle 14 dans sa zone centrale.

La figure 2 « Art Antérieur » donne un exemple d'un profil type des contraintes de cisaillement observé dans un film de colle 14, le profil variant avec un minimum dans la partie médiane et un maximum aux extrémités du film de colle.

Cette concentration de contraintes provient essentiellement de la déformation des pièces (10,12) assemblées sous l'effet des composantes longitudinales de traction T.

Mais, cette concentration de contraintes peut aussi être aggravée par d'autres facteurs tels que :
- des différences de module d'élasticité entre le film de colle 14 et le matériau des pièces (10,12) à assembler,
- des différences de module d'élasticité entre les différents matériaux des pièces (10,12) à assembler, carbone et métal par exemple,
- des dilatations différentielles sous contraintes thermiques des pièces (10,12) à assembler, les mouvements relatifs des pièces (10,12) augmentant les contraintes dans le film de colle 14, et cela d'autant plus à ses extrémités, et
- la longueur de collage.

Aussi, on entend au sens de contraintes de cisaillement, les contraintes longitudinales de cisaillement liées aux efforts de traction/compression exercés sur les deux pièces (10,12), mais également les contraintes longitudinales de cisaillement induites par la déformation des pièces (10,12) et les autres facteurs aggravants.

Inévitablement, la concentration de contraintes entraîne des déformations plus importantes de la colle aux extrémités du film de colle 14.

Aussi, afin de parer à d'éventuels arrachements du film de colle 14, il est connu de prévoir un débordement 16 du film de colle 14 à ses extrémités, ou de munir localement les pièces (10,12) à assembler d'un bec 18 ou d'un chanfrein 20 au droit des extrémités du film de colle 14, comme l'illustrent les figures 3 « Art Antérieur » et 4 « Art Antérieur ».

Afin d'illustrer une problématique visée par la présente invention et la solution apportée par l'invention, il est fait référence à des produits particuliers utilisés comme pièces de structure.

Ces pièces de structure sont des tirants, dénommés de façon générale "bielles", qui sont disposées dans une structure et qui assurent la reprise d'efforts.

Souvent, ces bielles doivent donc offrir des caractéristiques mécaniques leur permettant de reprendre des efforts importants de traction et de compression, tout en résistant au flambage. Afin d'alléger la structure, ces bielles doivent aussi offrir un poids réduit.

Pour répondre à ces objectifs, les corps de bielles peuvent être fabriqués à partir de tubes en matériaux composites, notamment réalisés à base de fibres de carbone et obtenus par pultrusion.

Cependant, en vue d'assurer la liaison de ces bielles à la structure, les extrémités de ces bielles prennent de préférence la forme d'embouts réalisés en métal, et plus particulièrement en alliage métallique léger tel que le titane ou l'aluminium, ces pièces en métal étant aisément usinables ou pouvant être obtenues par moulage avec une grande précision.

Il est donc nécessaire d'assurer la liaison de ces embouts métalliques, chacun à une des deux extrémités d'un tube en matériaux composites.

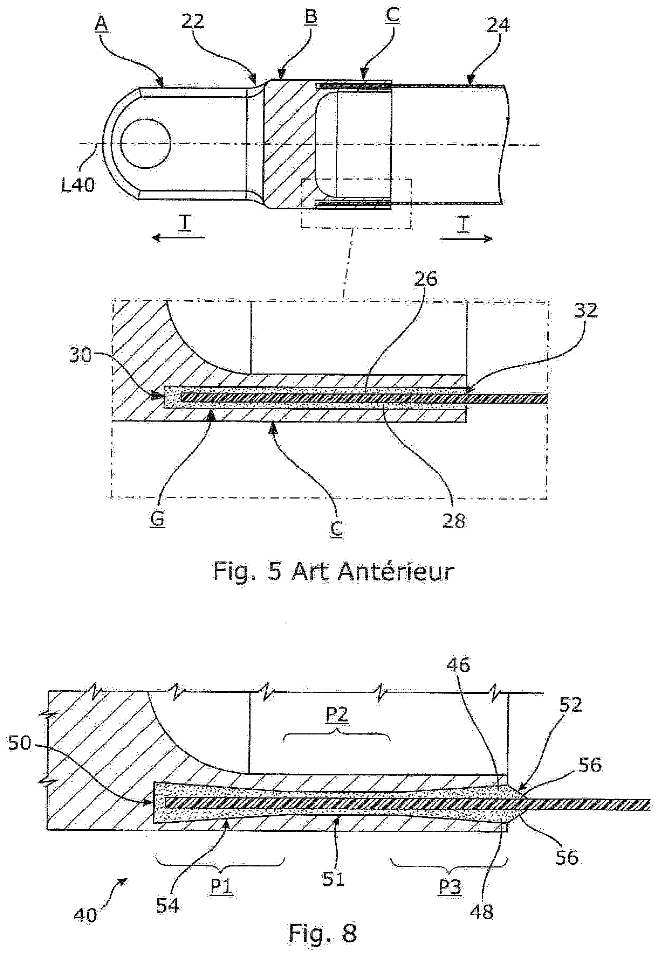

Comme l'illustre la figure 5 « Art Antérieur », la solution retenue est une liaison par collage.

Pour réaliser cette liaison par collage, un embout 22 comprend une partie A avec une chape destinée à être montée avec une goupille, une partie B destinée à assurer l'interface et une partie C destinée à assurer la liaison avec un tube 24 en matériaux composites.

Dans l'exemple retenu, la partie C est tubulaire et porte une gorge G périphérique, borgne, de façon à recevoir par emboîtement une extrémité du tube 24.

La colle est disposée dans la gorge en quantité permettant de combler l'espace entre le tube et les parois de la gorge et d'éviter tout emprisonnement de bulles.

On obtient ainsi un joint de colle intérieur 26 et un joint extérieur 28.

Néanmoins, si cette solution est satisfaisante, des essais ou des simulations numériques montrent qu'il se produit une concentration de contraintes en certaines parties de ladite liaison lorsque l'embout 22 et le tube 24 sont soumis à des efforts induisant des composantes de traction T induisant des contraintes axiales sensiblement perpendiculaires à la surface d'assemblage.

Comme dans l'assemblage de pièces (10,12) aux surfaces parallèles, on constate une répartition non homogène des contraintes de cisaillement au sein des joints de colle (26,28) pouvant être illustrée par le profil type représenté en figure 2 « Art Antérieur ».

On constate ainsi que le profil des contraintes dans les joints (26,28) varie avec un minimum dans la partie médiane et un maximum aux extrémités des joints, et plus encore sur le bord libre 30 du tube du côté embout, en fond de gorge, que sur le bord libre 32, côté tube.

Il y a donc présence d'une surcontrainte de cisaillement au droit du bord libre 30 côté embout, en fond de gorge, et au droit du bord libre 32, côté tube.

Enfin, on constate surtout que la courbe, en trait mixte, des contraintes dans les joints (26,28) vient en intersection avec la courbe, en trait continu, de résistance à la rupture de la colle qui est constante, et se prolonge donc au-delà de la résistance à la rupture de la colle, ce qui engendre la rupture de la liaison collée.

Aussi, la présente invention propose un procédé de collage pour pallier aux problèmes des liaisons par collage selon l'art antérieur, et pour obtenir une contrainte de cisaillement aussi faible que possible là où elle est maximale avec les liaisons de l'art antérieur, et avec une meilleure répartition de ces contraintes de cisaillement sur la longueur de la zone collée afin de mieux solliciter les parties faiblement sous contrainte.

Afin d'obtenir une liaison par collage suffisante, le procédé de collage selon l'invention est réalisé de sorte que les contraintes de cisaillement restent inférieures à la résistance limite à la rupture de la colle.

A cet effet, l'invention a pour objet un procédé de réalisation d'une liaison collée selon la revendication 1 et un tube et embout selon la revendication 8.

Enfin, la présente invention couvre aussi des assemblages réalisés à l'aide de ce procédé de collage, comme un embout et un tube liés avec une telle liaison collée, et une bielle comprenant un embout et un tube liés avec une telle liaison collée.

Le procédé de collage est maintenant décrit en détail suivant un mode de réalisation particulier, non limitatif, les différentes figures représentant :
- Figure 1 Art Antérieur : une vue schématique d'une liaison collée entre deux pièces aux surfaces sensiblement parallèles de l'art antérieur,
- Figure 2 Art Antérieur : une courbe générale schématique des valeurs des contraintes de cisaillement, dans l'art antérieur, par rapport à la résistance à la rupture de la colle,
- Figures 3 et 4 Art Antérieur : des vues de détail de solutions connues visant à prévenir l'arrachement des extrémités des liaisons collées selon l'art antérieur,
- Figure 5 Art Antérieur : une vue schématique d'une liaison collée d'un embout sur un tube en matériaux composites, selon l'art antérieur,
- Figure 6 : une vue schématique en coupe selon un plan médian longitudinal d'une liaison collée d'un embout sur un tube en matériaux composites, selon l'invention et avec des joints de colle présentant une variation progressive et non linéaire d'épaisseur,
- Figure 7 : une vue de la courbe générale des valeurs des contraintes de cisaillement, par rapport à la résistance à la rupture de la colle dans une liaison collée selon la présente invention,
- Figure 8 : une vue schématique en coupe selon un plan médian longitudinal d'une liaison collée d'un embout sur un tube en matériaux composites, selon l'invention et avec des joints de colle présentant des variations linéaires d'épaisseur, et
- Figure 9 : une vue schématique en coupe selon un plan médian longitudinal d'une liaison collée d'un embout sur un tube en matériaux composites, selon l'invention et avec un embout présentant des réductions d'épaisseur aux bords libres des joints situés côté tube.

Sur la figure 2 Art Antérieur, on constate que la courbe des valeurs de cisaillement, en trait mixte, vient en intersection avec la courbe de résistance à la rupture de la colle, en trait continu, ceci aux deux extrémités en I1 et I2.

On constate donc que la résistance de la liaison collée lorsqu'elle subit des efforts de traction/compression est déterminée par ces valeurs aux points d'intersections I1 et I2.

Or, il apparaît nécessaire que les valeurs de surcontraintes dans la liaison collée restent inférieures aux performances de résistance de la colle.

La résistance du montage est ainsi définie par la résistance de la liaison collée qui est inférieure à la résistance à la rupture de ladite colle.

Dans le tableau ci-dessous, qui regroupe les valeurs mesurées à température ambiante, +20°C, on constate les variations chiffrées des contraintes de cisaillement générées dans les joints de colle (26,28) de l'assemblage d'un tube 24 avec un embout 22 selon l'art antérieur, en partie médiane et aux extrémités, par exemple avec une colle à base de résine époxy pour une force de traction de 154 kN, appliquée sur un tube en carbone d'un diamètre de 60 mm, la longueur de collage retenue étant de 50 mm.

**Tableau 1 (+20°C) :**

| Joint de colle intérieur | | | Joint de colle extérieur | | |
|---|---|---|---|---|---|
| Bord libre côté embout | Partie médiane | Bord libre côté tube | Bord libre côté embout | Partie médiane | Bord libre côté tube |
| 33,3 MPa | 3,2 MPa | 14,5 MPa | 27,0 MPa | 3,3 MPa | 11,9 MPa |

Lorsque la température varie fortement, en positif ou en négatif, les valeurs sont sensiblement modifiées, ce qui limite plus encore les valeurs de résistance de la liaison collée, en augmentant les surcontraintes générées aux bords (30,32) des joints (26,28) et notamment côté embout, en fond de gorge.

De plus, comme indiqué dans le préambule, la dilatation différentielle agit comme une contrainte supplémentaire de cisaillement, au même titre que la traction exercée sur les deux pièces (22,24).

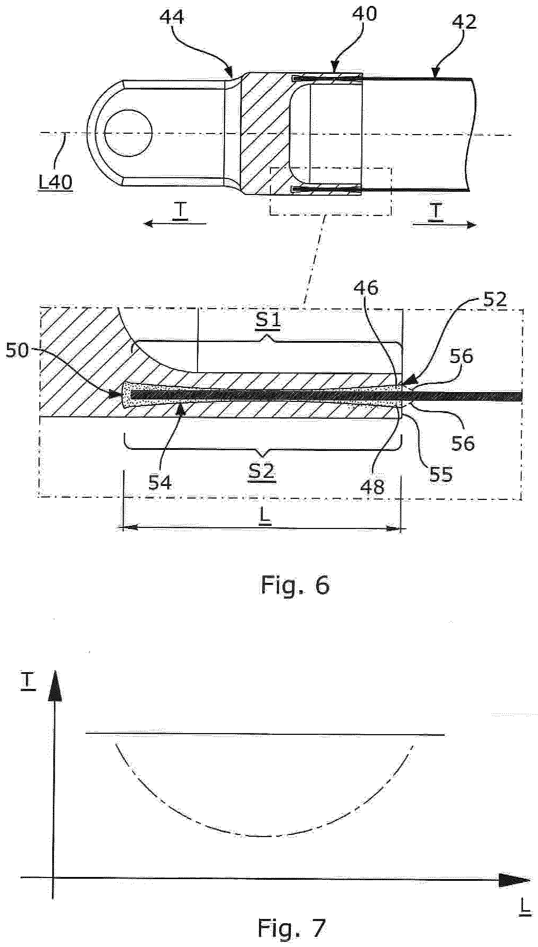

Selon la présente invention, et comme illustré en figure 6, dans le cas d'une liaison 40 collée, destinée à assembler un tube 42 et un embout 44, l'embout 44 comporte, de façon connue, une gorge 54 périphérique, borgne, de façon à recevoir par emboîtement une extrémité du tube 42.

Par gorge 54 périphérique, l'invention entend une gorge 54 creusée dans le champ annulaire intérieur 55, côté tube, de l'embout 44, et dans une direction parallèle à l'axe longitudinal L40 de la liaison 40.

Ensuite, l'invention prévoit au moins un joint de colle intérieur 46 et/ou un joint de colle extérieur 48 dont l'épaisseur est variable d'un bord libre 50, côté embout, à l'autre bord libre 52, côté tube, desdits joints (46, 48).

De préférence, la liaison collée 40 comprend un joint de colle intérieur 46 et un joint de colle extérieur 48, l'embout 44 et le tube 42 comprenant deux surfaces collées (S1,S2) entre eux.

Toujours de préférence, les surfaces collées (S1,S2) de la liaison 40 s'étendent sur toute la longueur de superposition L entre l'embout 44 et le tube 42 et autour d'un axe longitudinal L40.

Selon la présente invention, les joints (46, 48) présentent des épaisseurs augmentées aux bords libres (50, 52) des joints, et de préférence une épaisseur augmentée plus importante côté embout 50, en fond de gorge, que l'épaisseur augmentée côté tube 52.

Ainsi, les joints (46, 48) sont diminués en partie médiane.

Pour obtenir un tel résultat, on usine par exemple la gorge 54 dans l'embout 44 de façon à générer un logement à épaisseur variable et on injecte de la colle à refouler.

De préférence, l'embout 44 et le tube 42 ayant des sections cylindriques, les surfaces collées (S1,S2) et les joints (46, 48) sont aussi cylindriques.

Toutefois, en variante, l'embout 44 et le tube 42 pourraient aussi avoir d'autres sections fermées ou semi-fermées autour de l'axe longitudinal L40 de la liaison 40, comme par exemple des sections elliptiques, en U, en W, en I ou suivant un polygone quelconque ouvert ou fermé.

Par sections fermées ou semi-fermées, l'invention entend toute section conférant un volume non plan à l'embout 44 et au tube 42 autour de l'axe longitudinal L40, c'est-à-dire un volume avec au moins une partie creuse, ouverte ou fermée, le long de l'axe longitudinal L40.

Aussi, et quelle que soit la section fermée ou semi-fermée de l'embout 44 et du tube 42 autour de l'axe longitudinal L40, les joints (46, 48) ont aussi une section fermée ou semi-fermée autour de l'axe longitudinal L40.

De préférence, les joints (46, 48) ont des sections fermées ou semi-fermées de profils sensiblement identiques aux sections fermées ou semi-fermées de l'embout 44 et du tube 42 autour de l'axe longitudinal L40 de la liaison 40.

Avantageusement, la variation d'épaisseur des joints (46, 48) de colle prévue par l'invention permet de diminuer le gradient des surcontraintes de cisaillement.

Ce résultat est d'ailleurs illustré par le tableau 2 ci-dessous, donnant les résultats des essais ou des simulations obtenus avec une liaison 40 selon l'invention lorsque l'embout 44 et le tube 42 sont sous l'effet de composantes axiales de traction T, ces résultats étant à comparer avec ceux donnés dans le tableau 1.

Les conditions sont strictement identiques sauf la longueur de collage qui est diminuée.

En effet, au vu des performances de la liaison collée 40 selon l'invention, il est possible de réduire la longueur des joints de colle (46, 48).

Cette réduction de longueur contribue en outre à améliorer la liaison 40 car les contraintes de cisaillement engendrées par les dilatations différentielles liées à la nature différente des matériaux sont également diminuées.

**Tableau 2 (+20°C)**

| Joint de colle intérieur | | | Joint de colle extérieur | | |
|---|---|---|---|---|---|
| **Epaisseur 1,1 mm** | **Epaisseur 0,4 mm** | **Epaisseur 1,3 mm** | **Epaisseur 1,3 mm** | **Epaisseur 0,4 mm** | **Epaisseur 1,3 mm** |
| Bord libre côté embout | Partie médiane | Bord libre côté tube | Bord libre côté embout | Partie médiane | Bord libre côté tube |
| 16,6 MPa | 6,1 MPa | 13,4 MPa | 24,1 MPa | 6,9 MPa | 10,3 MPa |

Les joints de colle (46, 48), de longueur réduite qui plus est, travaillent de façon plus homogène, et leur partie médiane assure maintenant une reprise des efforts plus significative.

La répartition est donc meilleure et les valeurs maximales sont réduites.

C'est ainsi que, sur la courbe schématique de la figure 7, on constate qu'il n'y a plus d'intersections, et que les valeurs maximales des contraintes axiales de cisaillement restent donc inférieures à la résistance à la rupture de la colle.

La liaison collée 40 travaille maintenant de façon optimisée puisque l'on ne dépasse pas la résistance maximale à la rupture de la colle.

Selon un perfectionnement de l'invention, illustré en traits interrompus en figure 6, il est possible de prolonger les joints de colle (46, 48) au-delà de l'embout 44 et de la longueur de superposition L entre le tube 42 et l'embout 44. De tels prolongements 56 peuvent être sous forme de lèvre, ou en biseau, grâce à une bague perdue de mise en forme.

Ces prolongements 56 permettent d'étendre la diffusion des contraintes au-delà de la superposition des deux pièces (42, 44).

Selon un autre perfectionnement, la surcontrainte de cisaillement étant plus importante au droit du bord libre 50, côté embout en fond de gorge, qu'au droit du bord libre 52, côté tube, la variation d'épaisseur est telle que les joints de colle intérieur et extérieur (46, 48) sont plus épais au droit du bord libre 50, côté embout, qu'au droit du bord libre 52, côté tube.

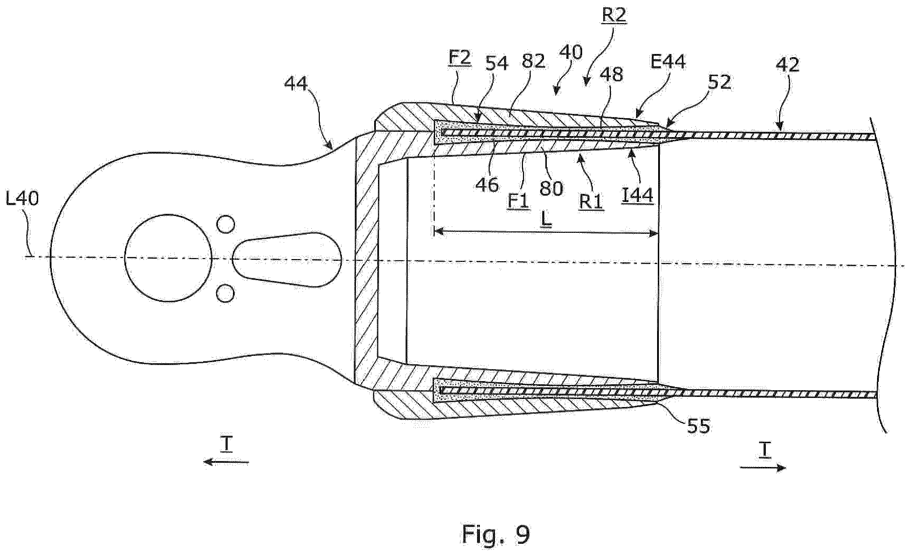

De préférence et comme dans les exemples représentés en figure 6 ou en figure 9, la liaison collée 40 comprend un joint de colle intérieur 46 et un joint de colle extérieur 48, et les deux joints de colle (46, 48) suivent une variation progressive et non linéaire d'épaisseur entre leur bord libre 50, côté embout, et leur autre bord libre 52, côté tube.

En variante, seul un joint de colle (46, 48) de la liaison collée 40 pourrait suivre une variation progressive et non linéaire d'épaisseur entre son bord libre 50, côté embout, et son autre bord libre 52, côté tube.

Par variation progressive et non linéaire, l'invention entend une variation suivant un profil courbe et sans palier du bord libre 50 au bord libre 52.

Selon l'invention, cette variation non linéaire d'épaisseur est préférée car elle correspond mieux au profil de variation idéal obtenu après une modélisation numérique de la liaison collée 40 et différents calculs par éléments finis simulant le comportement des pièces (42, 44) et de la liaison collée 40 sous efforts.

Toutefois, cette variation non linéaire d'épaisseur rend plus difficile l'usinage de la gorge 54 dans l'embout 44.

Aussi, et comme dans l'exemple représenté en figure 8, les deux joints de colle (46, 48) de la liaison collée 40 peuvent suivre des variations linéaires d'épaisseur entre le bord libre 50, côté embout, et l'autre bord libre 52, côté tube.

Comme précédemment, seul un joint de colle (46, 48) de la liaison collée 40 pourrait suivre des variations linéaires d'épaisseur entre son bord libre 50, côté embout, et son autre bord libre 52, côté tube.

Plus en détails, dans une première portion P1 située entre son bord libre 50, côté embout, et sa partie médiane 51, l'épaisseur d'un joint de colle (46, 48) décroît linéairement.

Puis, dans une deuxième portion P2 correspondant sensiblement à sa partie médiane 51, l'épaisseur d'un joint de colle (46, 48) reste sensiblement constante.

Et, dans une troisième portion P3 située entre sa partie médiane 51 et son autre bord libre 52, côté tube, l'épaisseur d'un joint de colle (46, 48) croît linéairement.

Avantageusement, ces variations linéaires d'épaisseur des joints de colle (46, 48) facilitent l'usinage de la gorge 54 dans l'embout 44.

Selon un autre perfectionnement d'une liaison collée 40 illustré en figure 9, l'invention prévoit au moins une réduction extérieure d'épaisseur R1, R2 de l'embout 44 au droit du bord libre 52, côté tube, d'au moins un joint (46, 48).

Par réduction extérieure d'épaisseur R1, R2 de l'embout 44, l'invention entend une réduction réalisée sur les faces F1, F2 de l'embout 44 extérieures à la liaison collée 40 et donc non encollées.

De préférence, la liaison collée 40 comprenant un joint de colle intérieur 46 et un joint de colle extérieur 48, l'embout 44 comprend une extrémité extérieure E44 d'épaisseur réduite au droit du bord libre 52, côté tube, du joint extérieur 48, et une extrémité intérieure I44 d'épaisseur réduite au droit du bord libre 52, côté tube, du joint intérieur 46.

Toujours de préférence, plus on se rapproche du bord libre 52, côté tube, d'un joint (46, 48), plus l'épaisseur R1, R2 de l'embout 44 réduit.

Idéalement, les extrémités extérieure E44 et intérieure I44 offrent une réduction extérieure d'épaisseur R1, R2 progressive, c'est-à-dire sans palier.

Toutefois, et en raison des limites imposées par les moyens d'usinage et le matériau usiné, ces réductions extérieure d'épaisseur R1, R2, et donc l'embout 44, peuvent se terminer par un chanfrein suivi d'un épaulement.

L'embout 44 comprenant une jupe intérieure 80 et une bague extérieure 82 entre lesquelles est prévue la gorge 54, la jupe intérieure 80 et la bague extérieure 82 de l'embout 44 présentent chacune une réduction extérieure d'épaisseur R1, R2 au droit du bord libre 52 des joints (46, 48).

Ces réductions extérieure d'épaisseurs R1, R2 permettent de diminuer la rigidité et de donner de la flexibilité aux parties collées de l'embout 44 au droit du bord libre 52 des joints (46, 48), soit aux extrémités extérieure E44 et intérieure I44 de l'embout 44, ceci afin de réduire les sollicitations de l'embout 44 sur les joints (46, 48) au droit de leur bord libre 52 lorsque l'embout 44 et le tube 42 sont sous l'effet de composantes axiales de traction T.

Ainsi, on réduit les contraintes de cisaillement maximales constatées dans le bord libre 52 des joints (46, 48) et on améliore la répartition des contraintes dans les joints de colle (46, 48) lorsque l'embout 44 et le tube 42 sont sollicités en traction.

De manière générale, le procédé de réalisation d'une liaison par collage 40 entre une première pièce (42, 62) et une seconde pièce (44,64), avec une longueur L de superposition, et soumises à des efforts T dans au moins une direction axiale, consiste à réaliser au moins un joint de colle (46, 48) sur au moins une partie de la longueur L entre les deux dites pièces, ce au moins un joint (46, 48) présentant une épaisseur variable suivant la direction des efforts auxquels les première et seconde pièces sont soumises.

Le procédé selon l'invention prévoit aussi de réaliser au moins un joint de colle (46, 48) présentant, selon la direction longitudinale des efforts, une épaisseur supérieure au droit de chacun des deux bords libres (50, 52) dudit joint par rapport à la zone médiane, ceci dans la direction axiale des efforts T.

La variation d'épaisseur prévue par l'invention apporte une progressivité dans la rigidité du joint de colle (46, 48) de façon que les zones extrêmes, où les déformations relatives des deux pièces à assembler (42, 44) sont maximales, constituent des portions du joint de colle plus flexibles, et de façon que la zone centrale, rendue plus mince, constitue une portion plus rigide du joint.

Ainsi, les contraintes de cisaillement sont proportionnellement moins fortes dans les zones extrêmes, tandis que la zone centrale reçoit une fraction proportionnellement plus importante des efforts T de traction entre les deux pièces.

Pour certaines liaisons collées particulières, le procédé selon l'invention consiste à réaliser une variation d'épaisseur telle que le joint de colle (46, 48) au droit d'un bord libre (50) est plus épais que le joint de colle (46, 48) au droit de l'autre bord libre (52) dudit joint.

Dans le cadre de la réalisation d'une liaison collée 40 entre un tube 42 et un embout 44, la liaison collée 40 comprenant au moins un joint de colle intérieur 46 et/ou un joint de colle extérieur 48 dont l'épaisseur est variable d'un bord libre 50, côté embout, à l'autre bord libre 52, côté tube, desdits joints (46, 48), le procédé selon l'invention consiste à usiner une gorge 54 dans l'embout 44 selon le profil de variation recherchée d'épaisseur du ou des joint(s) colle (46, 48), à introduire le tube 42 dans l'embout 44, et à injecter de la colle dans la gorge 54 en évitant l'introduction de bulles d'air.

Avantageusement, on constate que le procédé est parfaitement applicable exactement de la même façon à une liaison collée entre deux pièces à profil ouvert ou entre des pièces sans forme de révolution.

Le procédé selon l'invention est de préférence adapté à la réalisation d'une liaison collée 40 entre un embout métallique 44 et un tube 42 en matériaux composites en vue de la fabrication d'une bielle, deux embouts 44 étant rapportés aux deux extrémités d'un tube 42 par l'intermédiaire de liaisons collées 40 pour former une bielle.

Bien entendu, l'invention couvre une bielle comprenant au moins un embout 44, de préférence métallique, rapporté sur un tube 42, de préférence en matériaux composites, avec au moins une liaison collée 40 selon l'invention.

Selon l'invention, une telle bielle est destinée à une utilisation aéronautique et la réalisation de structures d'aéronef.

Toutefois, le procédé selon l'invention pourrait aussi être adapté à la réalisation de toute bielle de structure ou d'une liaison entre une pale d'éolienne et le rotor de l'éolienne, la pale pouvant comprendre une embase cylindrique à fixer sur un embout cylindrique solidaire du rotor de l'éolienne.

Aussi, le procédé selon l'invention pourrait aussi être applicable à une liaison collée entre deux pièces en matériaux composites ou entre deux pièces métalliques.

Enfin, il est à noter que l'invention concerne la réalisation d'un assemblage par une liaison collée 40 entre des pièces (40, 42) rigides, c'est-à-dire dont le module d'élasticité est supérieur à 50 GPa.

## Revendications

1. Procédé de réalisation d'une liaison collée (40) entre un tube (42) cylindrique et un embout (44) cylindrique, avec une longueur (L) de superposition autour d'un axe longitudinal (L40), le tube (42) et l'embout (44) étant soumis à des efforts (T) dans au moins une direction longitudinale, le procédé consistant à réaliser une liaison collée (40) comprenant au moins un joint de colle intérieur (46) et un joint de colle extérieur (48), sur au moins une partie de la longueur (L) entre le tube (42) et l'embout (44), un tel joint (46, 48) ayant une section fermée ou semi-fermée autour de l'axe longitudinal (L40) de la liaison (40), l'épaisseur d'un joint de colle (46, 48) variant d'un bord libre (50), côté embout, à l'autre bord libre (52), côté tube, dudit joint (46, 48) et suivant la direction des efforts auxquels le tube (42) et l'embout (44) sont soumis de façon à mieux répartir les surcontraintes sur la au moins une partie de ladite longueur (L), le procédé étant **caractérisé en ce qu'**on usine une gorge (54) dans l'embout (44) selon le profil de variation recherchée d'épaisseur du ou des joint(s) colle (46, 48), à introduire le tube (42) dans l'embout (44), et à injecter de la colle dans la gorge (54) en évitant l'introduction de bulles d'air et qu'on réalise au moins un joint de colle (46, 48) présentant, selon la direction longitudinale des efforts, une épaisseur supérieure au droit de chacun de ses deux bords libres (50, 52) par rapport à l'épaisseur dudit au moins un joint de colle (46, 48) dans sa partie médiane.

2. Procédé de réalisation d'une liaison collée (40) selon la revendication précédente, **caractérisé en ce qu'**au moins un joint de colle (46, 48) de la liaison collée (40) suit une variation progressive et non linéaire d'épaisseur entre ses deux bords libres (50, 52).

3. Procédé de réalisation d'une liaison collée (40) selon la revendication précédente, **caractérisé en ce que**, la liaison collée (40) comprend un joint de colle intérieur (46) et un joint de colle extérieur (48), les deux joints de colle (46, 48) de la liaison collée (40) suivent une variation progressive et non linéaire d'épaisseur entre leurs deux bords libres (50, 52).

4. Procédé de réalisation d'une liaison collée (40) selon la revendication 1, **caractérisé en ce qu'**au moins un joint de colle (46, 48) de la liaison collée (40) suit des variations linéaires d'épaisseur entre ses deux bords libres (50, 52), l'épaisseur du joint de colle (46, 48) décroissant linéairement dans une première portion (P1) située entre un premier bord libre (50, 52) et sa partie médiane (51), l'épaisseur du joint de colle (46, 48) restant constante dans une deuxième portion (P2) correspondant à sa partie médiane (51), et l'épaisseur du joint de colle (46, 48) croissant linéairement dans une troisième portion (P3) située entre sa partie médiane (51) et son autre bord libre (50, 52).

5. Procédé de réalisation d'une liaison collée (40) selon l'une des revendications précédentes, **caractérisé en ce qu'**il consiste à prévoir une réduction extérieure d'épaisseur (R1, R2) de l'embout (44) au droit d'au moins un bord libre (50, 52) du joint (46, 48).

6. Procédé de réalisation d'une liaison collée (40) selon l'une des revendications précédentes, **caractérisé en ce qu'**au moins un joint (46, 48) de colle est débordant extérieurement à la liaison réalisée (40).

7. Procédé de réalisation d'une liaison collée (40) selon l'une des revendications précédentes, **caractérisé en ce qu'**il consiste à réaliser une variation d'épaisseur telle qu'au moins un joint de colle (46, 48) est plus épais au droit d'un premier bord libre (50) qu'au droit de l'autre bord libre (52).

8. Tube (42) et embout (44) comprenant au moins une surface collée (S1, S2) entre eux, l'embout (44) comportant une gorge (54) périphérique, borgne, de façon à recevoir par emboîtement une extrémité du tube (42) sur une longueur de superposition (L), le tube (42) et l'embout (44) étant liés par au moins une liaison collée (40) comprenant au moins un joint de colle intérieur (46) et un joint de colle extérieur (48) sur au moins une partie de la longueur (L) entre le tube (42) et l'embout (44) et autour d'un axe longitudinal (L40), un tel joint (46, 48) ayant une section fermée ou semi-fermée autour de l'axe longitudinal (L40) de la liaison (40), et l'épaisseur d'un joint de colle (46, 48) variant d'un bord libre (50), côté embout, à l'autre bord libre (52), côté tube, dudit joint (46, 48), **caractérisés en ce qu'**au moins un joint de colle (46, 48) présente une épaisseur supérieure au droit de chacun de ses deux bords libres (50, 52) par rapport à l'épaisseur dudit au moins un joint de colle (46, 48) dans sa partie médiane.

9. Tube (42) et embout (44) selon la revendication précédente, **caractérisés en ce qu'**au moins un joint de colle (46, 48) de la liaison collée (40) suit une variation progressive et non linéaire d'épaisseur entre ses deux bords libres (50, 52).

10. Tube (42) et embout (44) selon la revendication précédente, **caractérisés en ce que**, la liaison collée (40) comprenant un joint de colle intérieur (46) et un joint de colle extérieur (48), les deux joints de colle (46, 48) de la liaison collée (40) suivent une variation progressive et non linéaire d'épaisseur entre leurs deux bords libres (50, 52).

11. Tube (42) et embout (44) selon la revendication 8 ou 9, **caractérisés en ce qu'**au moins un joint de colle (46, 48) de la liaison collée (40) suit des variations linéaires d'épaisseur entre ses deux bords libres (50, 52), l'épaisseur du joint de colle (46, 48) décroissant linéairement dans une première portion (P1) située entre un premier bord libre (50, 52) et sa partie médiane (51), l'épaisseur du joint de colle (46, 48) restant constante dans une deuxième portion (P2) correspondant à sa partie médiane (51), et l'épaisseur du joint de colle (46, 48) croissant linéairement dans une troisième portion (P3) située entre sa partie médiane (51) et son autre bord libre (50, 52).

12. Tube (42) et embout (44) selon l'une des revendications 8 à 11, **caractérisés en ce que** l'embout (44) comprend au moins une réduction extérieure d'épaisseur (R1, R2) au droit du bord libre (52), côté tube, d'au moins un joint (46,48).

13. Tube (42) et embout (44) selon la revendication précédente, **caractérisés en ce que**, la liaison collée (40) comprenant un joint de colle intérieur (46) et un joint de colle extérieur (48), l'embout (44) comprend une extrémité extérieure (E44) d'épaisseur réduite au droit du bord libre (52), côté tube, du joint extérieur (48), et une extrémité intérieure (I44) d'épaisseur réduite au droit du bord libre (52), côté tube, du joint intérieur (46).

14. Tube (42) et embout (44) selon l'une des revendications 8 à 13, **caractérisés en ce qu'**au moins un joint de colle (46, 48) comprend un prolongement (56) à au moins l'un de ses bords libres (50, 52).

15. Tube (42) et embout (44) selon l'une des revendications 8 à 14, **caractérisés en ce qu'**au moins un joint de colle (46, 48) est plus épais au droit d'un bord libre (50, 52) qu'au droit de l'autre bord libre (50, 52) dudit joint.

16. Bielle comprenant au moins un embout (44) rapporté sur un tube (42) avec au moins une liaison collée (40) selon l'une des revendications 8 à 15.

17. Bielle selon la revendication précédente et comprenant au moins un embout (44) métallique rapporté sur un tube (42) en matériaux composite avec au moins une liaison collée (40).

## Patentansprüche

1. Verfahren zur Herstellung einer Klebeverbindung (40) zwischen einem zylindrischen Rohr (42) und einer zylindrischen Spitze (44) mit einer Überlagerungslänge (L) um eine Längsachse (L40), wobei das Rohr (42) und die Spitze (44) Kräften (T) in mindestens einer Längsrichtung ausgesetzt sind, wobei das Verfahren darin besteht, eine Klebeverbindung (40) herzustellen, die mindestens eine innere Klebefuge (46) und eine äußere Klebefuge (48) über mindestens einen Teil der Länge (L) zwischen dem Rohr (42) und der Spitze (44) umfasst, wobei eine derartige Fuge (46, 48) einen geschlossenen oder halbgeschlossenen Querschnitt um die Längsachse (L40) der Verbindung (40) hat, wobei die Stärke einer Klebefuge (46, 48) von einem freien Rand (50), spitzenseitig, zum anderen freien Rand (52), rohrseitig, der Fuge (46, 48) und gemäß der Richtung der Kräfte, denen das Rohr (42) und die Spitze (44) ausgesetzt sind, derart schwankt, dass die Überbeanspruchungen auf den mindestens einen Teil der Länge (L) besser verteilt werden, wobei das Verfahren **dadurch gekennzeichnet ist, dass** eine Nut (54) in die Spitze (44) gemäß dem gewünschten Stärkenschwankungsprofil der Klebefuge(n) (46, 48) eingearbeitet wird, das Rohr (42) in die Spitze (44) eingesetzt wird und bei Vermeidung der Einleitung von Luftblasen Kleber in die Nut (54) eingespritzt wird, und dass mindestens eine Klebefuge (46, 48) hergestellt wird, die gemäß der Längsrichtung der Kräfte eine größere Stärke bei jedem ihrer zwei freien Ränder (50, 52) in Bezug zu der Stärke der mindestens einen Klebefuge (46, 48) in ihrem mittleren Teil aufweist.

2. Verfahren zur Herstellung einer Klebeverbindung (40) nach dem vorangehenden Anspruch, **dadurch gekennzeichnet, dass** mindestens eine Klebefuge (46, 48) der Klebeverbindung (40) einer allmählichen und nicht linearen Stärkenschwankung zwischen ihren zwei freien Rändern (50, 52) folgt.

3. Verfahren zur Herstellung einer Klebeverbindung (40) nach dem vorangehenden Anspruch, **dadurch gekennzeichnet, dass** die Klebeverbindung (40) eine innere Klebefuge (46) und eine äußere Klebefuge (48) umfasst, wobei die zwei Klebefugen (46, 48) der Klebeverbindung (40) einer allmählichen und nicht linearen Stärkenschwankung zwischen ihren zwei freien Rändern (50, 52) folgen.

4. Verfahren zur Herstellung einer Klebeverbindung (40) nach Anspruch 1, **dadurch gekennzeichnet, dass** mindestens eine Klebefuge (46, 48) der Klebeverbindung (40) linearen Stärkeschwankungen zwischen ihren zwei freien Rändern (50, 52) folgt, wobei die Stärke der Klebefuge (46, 48) in einem ersten Abschnitt (P1), der sich zwischen einem ersten freien Rand (50, 52) und ihrem mittleren Teil (51) befindet, linear abnimmt, wobei die Stärke der Klebefuge (46, 48) in einem zweiten Abschnitt (P2), der ihrem mittleren Teil (51) entspricht, konstant bleibt, und die Stärke der Klebefuge (46, 48) in einem dritten Abschnitt (P3), der sich zwischen ihrem mittleren Teil (51) und ihrem anderen freien Rand (50, 52) befindet, linear zunimmt.

5. Verfahren zur Herstellung einer Klebeverbindung (40) nach einem der vorangehenden Ansprüche, **dadurch gekennzeichnet, dass** es darin besteht, eine äußere Stärkenreduzierung (R1, R2) der Spitze (44) bei mindestens einem freien Rand (50, 52) der Fuge (46, 48) vorzusehen.

6. Verfahren zur Herstellung einer Klebeverbindung (40) nach einem der vorangehenden Ansprüche, **dadurch gekennzeichnet, dass** mindestens eine Klebefuge (46, 48) außen über die hergestellte Verbindung (40) übersteht.

7. Verfahren zur Herstellung einer Klebeverbindung (40) nach einem der vorangehenden Ansprüche, **dadurch gekennzeichnet, dass** es darin besteht, eine Stärkenschwankung derart herzustellen, dass mindestens eine Klebefuge (46, 48) bei einem ersten freien Rand (50) dicker ist als bei dem anderen freien Rand (52).

8. Rohr (42) und Spitze (44), umfassend mindestens eine Klebefläche (S1, S2) zwischen sich, wobei die Spitze (44) eine blinde periphere Nut (54) derart aufweist, dass durch Einstecken ein Ende des Rohrs (42) über eine Überlagerungslänge (L) empfangen wird, wobei das Rohr (42) und die Spitze (44) durch mindestens eine Klebeverbindung (40) verbunden sind, umfassend mindestens eine innere Klebefuge (46) und eine äußere Klebefuge (48) über mindestens einen Teil der Länge (L) zwischen dem Rohr (42) und der Spitze (44) und um eine Längsachse (L40), wobei eine derartige Fuge (46, 48) einen geschlossenen oder halbgeschlossenen Querschnitt um die Längsachse (L40) der Verbindung (40) hat und die Stärke einer Klebefuge (46, 48) von einem freien Rand (50), spitzenseitig, zum anderen freien Rand (52), rohrseitig, der Fuge (46, 48) schwankt, **dadurch gekennzeichnet, dass** mindestens eine Klebefuge (46, 48) eine größere Stärke bei jedem ihrer zwei freien Ränder (50, 52) in Bezug zu der Stärke der mindestens einen Klebefuge (46, 48) in ihrem mittleren Teil aufweist.

9. Rohr (42) und Spitze (44) nach dem vorangehenden Anspruch, **dadurch gekennzeichnet, dass** mindestens eine Klebefuge (46, 48) der Klebeverbindung (40) einer allmählichen und nicht linearen Stärkenschwankung zwischen ihren zwei freien Rändern (50, 52) folgt.

10. Rohr (42) und Spitze (44) nach dem vorangehenden Anspruch, **dadurch gekennzeichnet, dass**, wobei die Klebeverbindung (40) eine innere Klebefuge (46) und eine äußere Klebefuge (48) umfasst, die zwei Klebefugen (46, 48) der Klebeverbindung (40) einer allmählichen und nicht linearen Stärkenschwankung zwischen ihren zwei freien Rändern (50, 52) folgen.

11. Rohr (42) und Spitze (44) nach Anspruch 8 oder 9, **dadurch gekennzeichnet, dass** mindestens eine Klebefuge (46, 48) der Klebeverbindung (40) linearen Stärkeschwankungen zwischen ihren zwei freien Rändern (50, 52) folgt, wobei die Stärke der Klebefuge (46, 48) in einem ersten Abschnitt (P1), der sich zwischen einem ersten freien Rand (50, 52) und ihrem mittleren Teil (51) befindet, linear abnimmt, wobei die Stärke der Klebefuge (46, 48) in einem zweiten Abschnitt (P2), der ihrem mittleren Teil (51) entspricht, konstant bleibt, und die Stärke der Klebefuge (46, 48) in einem dritten Abschnitt (P3), der sich zwischen ihrem mittleren Teil (51) und ihrem anderen freien Rand (50, 52) befindet, linear zunimmt.

12. Rohr (42) und Spitze (44) nach einem der Ansprüche 8 bis 11, **dadurch gekennzeichnet, dass** die Spitze (44) mindestens eine äußere Stärkenreduzierung (R1, R2) bei dem freien Rand (52), rohrseitig, mindestens einer Fuge (46, 48) umfasst.

13. Rohr (42) und Spitze (44) nach dem vorangehenden Anspruch, **dadurch gekennzeichnet, dass**, wobei die Klebeverbindung (40) eine innere Klebefuge (46) und eine äußere Klebefuge (48) umfasst, die Spitze (44) ein äußeres Ende (E44) reduzierter Stärke bei dem freien Rand (52), rohrseitig, der äußeren Fuge (48) und ein inneres Ende (I44) reduzierter Stärke beim dem freien Rand (52), rohrseitig, der inneren Fuge (46) umfasst.

14. Rohr (42) und Spitze (44) nach einem der Ansprüche 8 bis 13, **dadurch gekennzeichnet, dass** mindestens eine Klebefuge (46, 48) eine Verlängerung (56) an mindestens einem ihrer freien Ränder (50, 52) umfasst.

15. Rohr (42) und Spitze (44) nach einem der Ansprüche 8 bis 14, **dadurch gekennzeichnet, dass** mindestens eine Klebefuge (46, 48) bei einem freien Rand (50, 52) stärker als bei einem anderen freien Rand (50, 52) der Fuge ist.

16. Pleuelstange, umfassend mindestens eine auf einem Rohr (42) mit mindestens einer Klebeverbindung (40) nach einem der Ansprüche 8 bis 15 angebrachten Spitze (44).

17. Pleuelstange nach dem vorangehenden Anspruch und umfassend mindestens eine auf einem Rohr (42) aus Verbundmaterial mit mindestens einer Klebeverbindung (40) angebrachten Metallspitze (44).

## Claims

1. Method for providing a bonded connection (40) between a cylindrical tube (42) and a cylindrical fitting (44), with a length (L) of superposition about a longitudinal axis (L40), the tube (42) and the fitting (44) being subjected to forces (T) in at least one longitudinal direction, with the method consisting in carrying out a bonded connection (40) comprising at least one adhesive interior joint (46) and an adhesive exterior joint (48), over at least one portion of the length (L) between the tube (42) and the fitting (44), with such a joint (46, 48) having a closed or semi-closed section about the longitudinal axis (L40) of the connection (40), with the thickness of an adhesive joint (46, 48) varying from one free edge (50), on the fitting side, to the other free edge (52), on the tube side, of said joint (46, 48) and along the direction of forces to which the tube (42) and the fitting (44) are subjected in such a way as to better distribute the overstresses over the at least one portion of said length (L), with the method being **characterised in that** a groove (54) is machined in the fitting (44) according to the variation profile sought of the thickness of the adhesive joint or joints (46, 48), the tube (42) is introduced into the fitting (44), and adhesive is injected into the groove (54) while avoiding the introduction of air bubbles and that at least one adhesive joint (46, 48) is carried out that has, along the longitudinal direction of the forces, a higher thickness opposite each one of its two free edges (50, 52) with respect to the thickness of said at least one adhesive joint (46, 48) in its median portion.

2. Method for providing a bonded connection (40) according to the preceding claim, **characterised in that** at least one adhesive joint (46, 48) of the bonded connection (40) follows a progressive and non-linear variation in the thickness between its two free edges (50, 52).

3. Method for providing a bonded connection (40) according to the preceding claim, **characterised in that**, the bonded connection (40) comprises an adhesive interior joint (46) and an adhesive exterior joint (48), the two adhesive joints (46, 48) of the bonded connection (40) follow a progressive and non-linear variation in the thickness between their two free edges (50, 52).

4. Method for providing a bonded connection (40) according to claim 1, **characterised in that** at least one adhesive joint (46, 48) of the bonded connection (40) follows linear variations in thickness between its two free edges (50, 52), the thickness of the adhesive joint (46, 48) decreasing linearly in a first portion (P1) located between a first free edge (50, 52) and its median portion (51), with the thickness of the adhesive joint (46, 48) remaining constant in a second portion (P2) corresponding to its median portion (51), and the thickness of the adhesive joint (46, 48) increasing linearly in a third portion (P3) located between its median portion (51) and its other free edge (50, 52).

5. Method for providing a bonded connection (40) according to one of the preceding claims, **characterised in that** it consists in providing an exterior reduction in thickness (R1, R2) of the fitting (44) opposite at least one free edge (50, 52) of the joint (46, 48).

6. Method for providing a bonded connection (40) according to one of the preceding claims, **characterised in that** at least one adhesive joint (46, 48) is overhanging exteriorly to the connection provided (40).

7. Method for providing a bonded connection (40) according to one of the preceding claims, **characterised in that** it consists in carrying out a variation in thickness such that at least one adhesive joint (46, 48) is thicker opposite a first free edge (50) than opposite the other free edge (52).

8. Tube (42) and fitting (44) comprising at least one adhesive surface (51, 52) between them, the fitting (44) comprising a peripheral blind groove (54), in such a way as to receive by nesting an end of the tube (42) over a length of superposition (L), the tube (42) and the fitting (44) being linked by at least one bonded connection (40) comprising at least one adhesive interior joint (46) and an adhesive exterior joint (48) over at least one portion of the length (L) between the tube (42) and the fitting (44) and about a longitudinal axis (L40), with such a seal (46, 48) having a closed or semi-closed section about the longitudinal axis (L40) of the connection (40), and the thickness of an adhesive joint (46, 48) varying from a free edge (50), on the fitting side, to the other free edge (52), on the tube side, of said joint (46, 48), **characterised in that** at least one adhesive joint (46, 48) has a greater thickness opposite each one of its two free edges (50, 52) with respect to the thickness of said at least one adhesive joint (46, 48) in its median portion.

9. Tube (42) and fitting (44) according to the preceding claim, **characterised in that** at least one adhesive joint (46, 48) of the bonded connection (40) follows a progressive and non-linear variation in the thickness between its two free edges (50, 52).

10. Tube (42) and fitting (44) according to the preceding claim, **characterised in that**, the bonded connection (40) comprising an adhesive interior joint (46) and an adhesive exterior joint (48), the two adhesive joints (46, 48) of the bonded connection (40) follow a progressive and non-linear variation in the thickness between their two free edges (50, 52).

11. Tube (42) and fitting (44) according to claim 8 or 9, **characterised in that** at least one adhesive joint (46, 48) of the bonded connection (40) follows linear variations in thickness between its two free edges (50, 52), with the thickness of the adhesive joint (46, 48) decreasing linearly in a first portion (Pl) located between a first free edge (50, 52) and its median portion (51), with the thickness of the adhesive joint (46, 48) remaining constant in a second portion (P2) corresponding to its median portion (51), and the thickness of the adhesive joint (46, 48) increasing linearly in a third portion (P3) located between its median portion (51) and its other free edge (50, 52).

12. Tube (42) and fitting (44) according to one of claims 8 to 11, **characterised in that** the fitting (44) comprises at least one exterior reduction in thickness (R1, R2) opposite the free edge (52), on the tube side, of at least one joint (46,48).

13. Tube (42) and fitting (44) according to the preceding claim, **characterised in that**, the bonded connection (40) comprising an adhesive interior joint (46) and an adhesive exterior joint (48), the fitting (44) comprises an exterior end (E44) with a reduced thickness opposite the free edge (52), on the tube side, of the exterior joint (48), and an interior end (144) of reduced thickness opposite the free edge (52), on the tube side, of the interior joint (46).

14. Tube (42) and fitting (44) according to one of claims 8 to 13, **characterised in that** at least one adhesive joint (46, 48) comprises an extension (56) at at least one of its free edges (50, 52).

15. Tube (42) and fitting (44) according to one of claims 8 to 14, **characterised in that** at least one adhesive joint (46, 48) is thicker opposite a free edge (50, 52) than opposite the other free edge (50, 52) of said joint.

16. Connecting rod comprising at least one fitting (44) added on a tube (42) with at least one bonded connection (40) according to one of claims 8 to 15.

17. Connecting rod according to the preceding claim and comprising at least one metal fitting (44) added on a tube (42) made of composite materials with at least one bonded connection (40).
